# EUROPÄISCHE PATENTANMELDUNG

(11) **EP 1 352 772 A2**
(43) Veröffentlichungstag der Anmeldung: **15.10.2003**
(21) Anmeldenummer: 03004700.5
(22) Anmeldetag: 04.03.2003
(51) Int. Cl.: B60K 26/02, G05G 1/14, F02D 11/02, B60K 31/18

(54) **Fahrgeschwindigkeitssteuereinrichtung für ein Kraftfahrzeug**

(30) Priorität: 12.04.2002 DE 10216317
(71) Anmelder: Bayerische Motoren Werke Aktiengesellschaft, 80809 München (DE)
(72) Erfinder: Kirmse, Stefan, 82541 Münsing (DE); Unterforsthuber, Jakob, 82216 Maisach (DE)

(57) **Zusammenfassung**

Die Erfindung betrifft eine Übertragungseinrichtung für die Führungsgröße einer Fahrgeschwindigkeitssteuereinrichtung für ein Kraftfahrzeug, mit über dem Führungsbereich mindestens einem verstellbaren und übergehbaren, abschaltbaren haptischen Wegbegrenzungsanschlag und außerdem mit mindestens einer Einrichtung zum Erzeugen einer Kraft-Weg-Hysterese. Sie ist dadurch gekennzeichnet, dass die Einrichtung zum Erzeugen der Kraft-Weg-Hysterese zumindest teilweise abschaltbar ist.

## Beschreibung

Die Erfindung betrifft eine Übertragungseinrichtung für die Führungsgröße einer Fahrgeschwindigkeitssteuereinrichtung für ein Kraftfahrzeug nach dem Oberbegriff des ersten Anspruchs.

Es sind bereits Fahrpedale, insbesondere Fahrpedalmodule mit verschiedenen Zusatzeinrichtungen bekannt. Um ein statisches Halten in einer gewünschten Pedalposition für den Fahrer zu erleichtern, ist es bekannt, ein Gaspedal mit einem Reibkörper auszustatten, der bei einer Vor- oder Rückwärtsbewegung des Pedalhebels Reibmomente vorbestimmter Größe entstehen lässt, so dass eine für die Bedienung günstige Kraft-Weg-Hysterese erzeugt wird.

Die DE 195 14 541 C2 beschreibt ein solches Gaspedal mit Reibkörper, bei dem für beide Bewegungsrichtungen des Pedalhebels unterschiedliche Hysteresewerte erzielt werden dadurch, dass der Reibkörper ein den Lagerbolzen teilweise umschlingender Draht- oder Seilzug ist, der mit einem Ende am Pedalhebel und mit dem anderen Ende über die Rückstellfeder am Fahrzeug angelenkt ist. Mit dieser Vorrichtung ergibt sich ein Pedalkraftverlauf, bei dem die Pedalkraft bei einer Bewegung des Pedalhebels vom Leerlauf in Richtung Volllast etwa doppelt so groß ist als bei einer Bewegung des Pedalhebels von Volllast zum Leerlauf hin. Für das statische Halten des Gaspedals an irgendeiner Stelle bedeutet dies, dass die coulombschen Reibkräfte den Fahrer darin unterstützen, das Gaspedal konstant in der selben Stellung zu halten.

Des Weiteren sind Mechanismen für aktive Fahrpedale, so genannte Force-Feedback-Fahrpedale, bekannt, mit denen mittels eines variabel verstellbaren Druckpunktes, dem Fahrer eine bestimmte Stellung des Fahrpedals haptisch angeboten werden kann. Zum Beispiel kann dem Fahrer durch einen variablen Druckpunkt mit einem aktiven Fahrpedal haptisch die notwendige Stellung des Fahrpedals zum Erreichen einer vorgegebenen Geschwindigkeit angezeigt werden. Folgt der Fahrer dem variablen Druckpunkt des aktiven Fahrpedals, wird die vorgegebene Geschwindigkeit eingehalten. Durch Übertreten des variablen Druckpunkts hat jedoch der Fahrer auch die Möglichkeit, über die vorgegebene Geschwindigkeit hinaus zu beschleunigen.

Eine solche Vorrichtung zur Begrenzung der Geschwindigkeit eines Fahrzeugs auf einen vorgegebenen Wert beschreibt die deutsche Offenlegungsschrift 24 42 511. Eine bequeme Verwendung einer solchen Vorrichtung für einen Fahrer setzt voraus, dass die Druckpunkte haptisch leicht spürbar sind, sich aber die Kräfte mit denen das Fahrpedal zu betätigen ist nicht zu stark erhöhen.

Wird nun ein solches aktives Fahrpedal mit einem Mechanismus zur Hystereseerzeugung über coulombsche Reibung kombiniert, wirkt der für die Bedienung des Fahrpedals günstige Hystereseverlauf, bei Beibehaltung von möglichst niedrigen Pedalkräften für den Fahrer, dem haptischen Empfinden eines Druckpunktes des aktiven Fahrpedals entgegen. Besonders bei einer Bewegung des Fahrpedals von Volllast in Richtung Leerlauf, wird ein eingestellter Druckpunkt leicht übergangen.

Aufgabe der Erfindung ist es, ein aktives Fahrpedal, mit einer Einrichtung zum Erzeugen eines verstellbaren, für den Fahrer haptisch fühlbaren Druckpunktes und mit einem Mechanismus zur Erzeugung einer Kraft-Weg-Hysterese bereitzustellen, das bei geringen Pedalkräften, sowohl das einfache haptische Erkennen von Druckpunkten, als auch, ohne Verwendung eines Druckpunktes, ein durch den Fahrer einfaches Halten des Fahrpedals in einer bestimmten Position ermöglicht.

Die Aufgabe wird mit den Merkmalen des ersten Anspruchs gelöst. Weitere Ausführungsformen der Erfindung beschreiben die Unteransprüche.

Die Erfindung stellt eine Übertragungseinrichtung für die Führungsgröße einer Fahrgeschwindigkeitssteuereinrichtung für ein Kraftfahrzeug bereit, mit über dem Führungsbereich mindestens einem verstellbaren und übergehbaren, abschaltbaren haptischen Wegbegrenzungsanschlag und außerdem mit mindestens einer Einrichtung zum Erzeugen einer Kraft-Weg-Hysterese. Sie ist dadurch gekennzeichnet, dass die Einrichtung zum Erzeugen der Kraft-Weg-Hysterese zumindest teilweise abschaltbar ist.

Bei einer bevorzugten Ausführungsform der Erfindung ist die Einrichtung zum Erzeugen der Kraft-Weg-Hysterese durch eine schaltbare Kupplung abschaltbar.

Ein vorteilhaftes Verfahren zum Betrieb der Übertragungseinrichtung ist dadurch gekennzeichnet, dass die Einrichtung zum Erzeugen der Kraft-Weg-Hysterese genau dann zumindest teilweise abgeschaltet wird, wenn ein verstell- und übergehbarer haptischer Wegbegrenzungsanschlag eingesetzt wird.

Wird im so genannten Force-Feedback-Modus unter Verwendung des verstellbaren und übergehbaren, abschaltbaren haptischen Wegbegrenzungsanschlags die Einrichtung zur Erzeugung der Kraft-Weg-Hysterese ausgeschaltet, hat das den Vorteil, dass die aktiv aufgebaute Rückstellkraft nicht durch die künstlich erzeugte Hysterese reduziert wird. Für den Fahrer ist ein haptischer Druckpunkt leichter spürbar und die krafterzeugenden Komponenten können schwächer dimensioniert und damit kleiner und leichter ausgelegt werden.

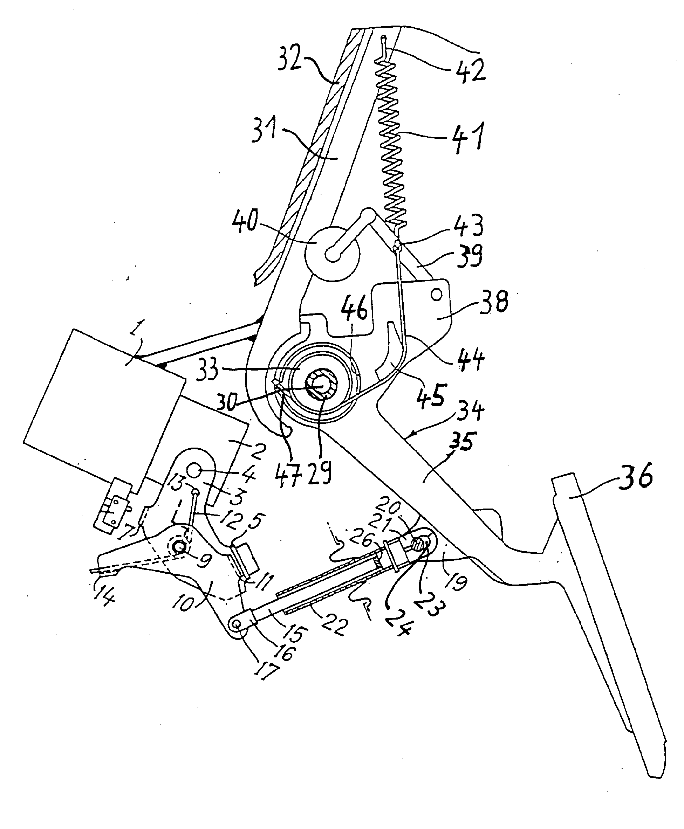

Im folgenden wird die Erfindung anhand eines Ausführungsbeispiels weiter erläutert. Die einzige Figur zeigt eine Fahrgeschwindigkeitssteuereinrichtung für ein Kraftfahrzeug, bestehend aus einem Fahrpedal mit einer Einrichtung zum Erzeugen einer Kraft-Weg-Hysterese und einer Einrichtung zum Erzeugen eines verstellbaren haptischen Druckpunktes.

Die einzige Figur zeigt eine Grundplatte 31, die fest mit einer Spritzwand 32 eines Kraftfahrzeugs verbunden ist und in der ein Lagerbolzen 30 festgehalten ist, auf dem ein als Winkelhebel ausgebildeter Pedalhebel 34 schwenkbar gelagert ist. An einem Hebelarm 35 des Pedalhebels 34 ist ein Pedal 36 angelenkt, während am anderen Hebelarm 38 ein Gestänge 39 zur Betätigung eines ebenfalls an der Grundplatte 31 befestigten Pedalweggebers 40 in bekannter Weise zur Bildung elektronischer Kennwerte für die elektrische Ansteuerung eines Regelgliedes, beispielsweise einer Drosselklappe der Brennkraftmaschine, angeschlossen ist. Die Bewegung des Pedalhebels 34 von der festgelegten Leerlaufstellung in Richtung Volllast erfolgt entgegen der Wirkung einer Rückstellfeder 41, die mit einem Ende 42 an der Grundplatte 31 und mit dem anderen Ende 43 mit einem Seilzug 44 verbunden ist und sich dabei zwischen Grundplatte 31 und Hebelarm 38 etwa rechtwinklig zu diesem erstreckt. Ausgehend von der Rückstellfeder 41 wird der Seilzug 44 an einer Gleitschiene 45 am Hebelarm 38 um einen Winkel von annähernd 90 Grad in Richtung des Lagerbolzens 30 umgelenkt. Der Seilzug 44 umschlingt eine auf einem seitlich vom Pedalhebel 34 liegenden Lagerbolzenabschnitt verdrehbar gelagerte und mit dem Lagerbolzen 30 über eine nur angedeutet schraffiert gezeichnete Kupplung 29 verbindbare Walze 33, deren Oberfläche eine Reibfläche 46 für den Seilzug 44 - als Reibkörper - bildet, der anschließend mit seinem freien Ende in einer Lasche 47 am Pedalhebel 34 fixiert ist.

Dabei erfolgt die Umschlingung so, dass bei geschlossener Kupplung 29 und einer Bewegung des Pedalhebels 34 in Volllastrichtung der Seilzug 44 von der Lasche 47 gegen die Reibfläche 46 angedrückt wird. Dies bedeutet, dass bei einer Betätigung des Pedalhebels 34 in Volllastrichtung bzw. in Richtung Vollgas eine stärkere Kraft aufgebracht werden muss und damit der Fahrer ein besseres Fahrgefühl bekommt, und dass bei einer Entlastung bzw. bei einer Rücknahme des Pedalhebels 34 eine Rückstellkraft durch die Rückstellfeder 41 erzeugt wird.

Bei offener Kupplung 29 und einer Bewegung des Pedalhebels 34 in Volllastrichtung wird der Seilzug 44 nicht relativ zur Reibfläche 46 bewegt, was bedeutet, dass bei einer Betätigung des Pedalhebels 34 in Volllastrichtung bzw. in Richtung Vollgas im wesentlichen nur eine Kraft entsprechend der Rückstellkraft der Rückstellfeder 41 aufgebracht werden muss. Damit bekommt der Fahrer ein besseres Gefühl für einen Druckpunkt, mit dem ihm eine bestimmte Stellung des Pedalhebels 34 haptisch angeboten werden kann. Dies erfolgt durch eine Einrichtung zum Erzeugen eines variabel verstellbaren Druckpunktes, die teils am Pedalhebel 34 angebracht ist und deren eingeschalteter Betriebszustand bedingt, dass die Kupplung 29 geöffnet wird.

Diese auch an der Grundplatte 31 befestigte Einrichtung besteht aus einem umsteuerbaren elektrischen Bremsmotor 1 mit angekuppeltem Getriebe 2 und einem Steuerhebel 3, der von der Abtriebswelle des Getriebes 2 angetrieben wird. Der Steuerhebel 3 hat einen ausgebogenen Teil 5 und einen ausgebogenen Teil 7, die Wegbegrenzungsanschläge bilden. Des Weiteren eine Achse 9, an der ein Löschhebel 10 angelenkt ist. Der Löschhebel 10 wird durch eine Torsionsfeder 12, die einerseits in einer Öffnung 13 des Hebels 3 gehalten ist und andererseits auf der ausgebogenen Klaue 14 des Hebels 10 aufliegt, auf Drehung beansprucht und mit einer vorstehenden Zone 11 gegen den ausgebogenen Teil 5 des Hebels 3 gedrückt. Eine Stange 15 ist am unteren Ende mit einem Gabelkopf 16 versehen, der bei 17 an dem Löschhebel 10 angelenkt ist. Der Pedalhebel 34 ist mit einem Ansatz 19 versehen, in dem eine Achse 20 gelagert ist, an der ein Gabelkopf 21 angelenkt ist, der auf einem Rohr 22 aufgepresst ist.

Die Bewegung des Gabelkopfes 21 um die Achse 20 ermöglicht ein Langloch 23 mit einem Spiel 24.

Die Einheit aus Gabelkopf 21 und Rohr 22 gleitet frei auf der Stange 15, die mit ihrem freien Ende an der Endfläche 26 des Gabelkopfes 21 anstößt und dadurch einen Wegbegrenzungsanschlag für den Pedalhebel 18 bildet.

Durch den Motor 1 kann der Hebel 3 unter Mitnahme des Löschhebels 10 gedreht werden. Dadurch wird die Stange 15 in eine Stellung gedreht, in der sie mit ihrem Anschlag 26 für den Pedalhebel 34 einen Druckpunkt bildet. Wenn der Fahrer aus einem bestimmten Grund z. B. zum Überholen, die durch den Druckpunkt eingestellte Geschwindigkeit vorübergehend überschreiten will, braucht er nur mit einer zusätzlichen Kraftausübung den Pedalhebel 34 niedertreten. Dieser nimmt dann die Einheit aus Gabelkopf 21 und Rohr 22 und damit durch deren Druck auf die Achse 20 auch die Stange 15 mit, die bei 26 an dem Gabelkopf 21 anliegt. Diese geradlinige Bewegung der Stange 15 bewirkt eine Drehung des Löschhebels 10 gegen das Moment der Feder 12, die den Hebel 10 in Anlage an den Teil 5 des Hebels 3 zu halten sucht, um seine Achse 9. Die Spannkraft der Feder 12 bestimmt daher die Größe der Zusatzkraft, die auf das Pedal 36 ausgeübt werden muss, um die eingestellte Geschwindigkeit zu überschreiten. Sobald der Fahrer seine Kraft wieder vermindert, wird die ursprüngliche Regelung durch den Anschlag 15 wiederhergestellt.

Um den durch die Stange 15 für das Pedal 36 erzeugbaren variablen, verstellbaren Druckpunkt für den Fahrer haptisch gut fühlbar zu machen, wird durch die Erfindung vorgeschlagen, in diesem, auch genannten Force Feedback Fahrpedalbetrieb, die Einrichtung zum Erzeugen der Kraft-Weg-Hysterese durch Öffnen der schaltbaren Kupplung 29 abzuschalten. Diese Kupplung 29 ermöglicht es der seilumschlungenen Walze 33 als Reibring verdrehbar auf dem Lagerbolzen 30 zu lagern. Im geöffneten Zustand der Kupplung 29 ist die Seilreibung des Seilzugs 44 am Lagerbolzen 30 nicht wirksam, da keine Relativbewegung zwischen Seilzug 44 und Walze 33 stattfindet. Es wird keine Reibarbeit zwischen Seilzug 44 und Walze 33 geleistet, sondern es ist nur noch die wesentlich geringere Reibung der Lagerung der Walze 33 auf dem Lagerbolzen 30 zu überwinden. Damit ist die Einrichtung zur Erzeugung der Kraft-Weg-Hysterese ausgeschaltet und der Druckpunkt der Einrichtung zu dessen Erzeugung wird vom Fahrer besser wahrgenommen, beziehungsweise die Pedalkräfte, erzeugt durch die Rückstellfeder 41, können wesentlich geringer gehalten werden.

Die Kupplung 29 kann axial oder radial als form- oder reibschlüssige Kupplung ausgeführt werden. Die Kupplungsbetätigung kann elektrisch, pneumatisch oder hydraulisch über eine Steuerung betätigt werden. Eine weitere mögliche Ausführungsform ist die mechanische Betätigung der Kupplung 29 über eine Verbindung mit der Einrichtung zur Erzeugung des Druckpunktes. Hierbei sind die Schaltpunkte mechanisch festgelegt. Zusätzlich kann vor Erreichen des Druckpunkts die Betätigungskraft durch Öffnen der Kupplung 29 abgesenkt werden, um die haptische Wahrnehmung zu verbessern. Im Force Feedback Fahrpedalbetriebsmodus kann der Fuß an der Druckstufe angelegt werden. Hierdurch kann der untertretene Bereich durch Ausschalten der Einrichtung zur Erzeugung der Kraft-Weg-Hysterese leichtgängiger ausgeführt werden, als mit zugeschalteter Einrichtung zum Erzeugen der Kraft-Weg-Hysterese.

## Patentansprüche

1. Übertragungseinrichtung für die Führungsgröße einer Fahrgeschwindigkeitssteuereinrichtung für ein Kraftfahrzeug, mit über dem Führungsbereich mindestens einem verstellbaren und übergehbaren, abschaltbaren haptischen Wegbegrenzungsanschlag und mindestens einer Einrichtung zum Erzeugen einer Kraft-Weg-Hysterese, **dadurch gekennzeichnet, dass** die Einrichtung zum Erzeugen der Kraft-Weg-Hysterese zumindest teilweise abschaltbar ist.

2. Übertragungseinrichtung nach Anspruch 1, **dadurch gekennzeichnet, dass** die Einrichtung zum Erzeugen der Kraft-Weg-Hysterese durch eine schaltbare Kupplung (29) abschaltbar ist.

3. Übertragungseinrichtung nach Anspruch 1 oder 2, **dadurch gekennzeichnet, dass** die Kupplung (29) axial oder radial als form- oder reibschlüssige Kupplung (29) ausgeführt ist.

4. Übertragungseinrichtung nach einem der Ansprüche 1 bis 3, **dadurch gekennzeichnet, dass** die Kupplung (29) elektrisch oder pneumatisch oder hydraulisch betätigt wird.

5. Übertragungseinrichtung nach einem der Ansprüche 1 bis 4, **dadurch gekennzeichnet, dass** die Kupplung (29) elektrisch oder mechanisch über eine Verbindung mit einer Einrichtung zur Erzeugung eines Druckpunktes betätigt wird.

6. Verfahren zum Betrieb einer Übertragungseinrichtung nach einem der Ansprüche 1 bis 5, **dadurch gekennzeichnet, dass** die Einrichtung zum Erzeugen der Kraft-Weg-Hysterese genau dann zumindest teilweise abgeschaltet wird, wenn ein verstell- und übergehbarer haptischer Wegbegrenzungsanschlag eingesetzt wird.
